# EUROPEAN PATENT APPLICATION

(11) **EP 4 817 983 A1**
(43) Date of publication of application: **07.10.2026**
(21) Application number: 26168241.3
(22) Date of filing: 26.03.2026
(51) Int. Cl.: B60W 30/182, B60W 10/04, B60W 10/10, B60W 10/12, B60W 10/18, B60W 10/20, B60W 10/22, B60W 30/02, B60W 30/18, B60W 40/10, B60W 50/08, B60W 40/068

(54) **VEHICLE SUBSYSTEM CONTROL METHOD AND APPARATUS**

(30) Priority: 02.04.2025 GB 202504931
(71) Applicant: Jaguar Land Rover Limited, Coventry, Warwickshire CV3 4LF (GB)
(72) Inventor: Silk, James, Coventry, CV3 4LF (GB); Walker, Stuart, Coventry, CV3 4LF (GB); Richardson, Thomas, Coventry, CV3 4LF (GB); Dyer, Timothy, Coventry, CV3 4LF (GB)
(74) Representative: Jaguar Land Rover Patents Department

(57) **Abstract**

Aspects of the present invention relate to a control system (1) for controlling selection of one of a plurality of subsystem control modes 170(n) to control operation of at least one vehicle subsystem (3(n)) of a vehicle (5). The subsystem control modes (170(n)) each correspond to one or more different terrain types. The one or more different terrain types comprise a first terrain type corresponding to sand. The subsystem control modes (170(n)) include a first subsystem control mode (170(1)) which corresponds to the first terrain type. The control system (1) comprises one or more processor (120) collectively configured to determine a rolling resistance (90) of the vehicle (5); and to determine a moving average (95) of the rolling resistance (90). The one or more processor (120) is collectively configured to select one of a plurality of mode selection probability maps (29(n)) in dependence on the determined moving average (95), the plurality of mode selection probability maps (29(n)) each defining a first terrain indicator probability component (33(A-E)) associated with a first terrain indicator parameter (165(n)). A first mode selection probability (31(n)) associated with the first terrain type is determined in dependence on the first terrain indicator probability component (33(A-E)) derived from the selected one of the plurality of mode selection probability maps (29(n)). One of the plurality of subsystem control modes (170(n)) is selected in dependence on the determined first mode selection probability (31(n)). Aspects of the present invention also relate to a vehicle (5); and a method (100) of controlling selection of one of a plurality of subsystem control modes.

## Description

### TECHNICAL FIELD

The present disclosure relates to a vehicle subsystem control method and apparatus. Aspects of the invention relate to a control system, a method, a vehicle and computer-readable instructions.

### BACKGROUND

It is known to control the operation of one or more vehicle subsystem in dependence on a terrain type on which the vehicle is operating. A plurality of subsystem control modes may be defined, for example corresponding to different terrain types. The one or more vehicle subsystem is controlled in dependence on the selected on of the plurality of subsystem control modes. Changes in the terrain, for example if the vehicle is operating off-road, may result in the selection of a different subsystem control mode. The selection of the different subsystem control mode may not be appropriate if the variations in the terrain type are localized.

It is an aim of the present invention to address one or more of the disadvantages associated with the prior art.

### SUMMARY OF THE INVENTION

Aspects and embodiments of the invention provide a control system, a vehicle, a method and computer-readable instructions as claimed in the appended claims.

According to an aspect of the present invention there is provided a control system for controlling selection of one of a plurality of subsystem control modes to control operation of at least one vehicle subsystem of a vehicle, each of the subsystem control modes corresponding to one or more different terrain types; wherein the one or more different terrain types comprise a first terrain type corresponding to sand, the subsystem control modes comprising a first subsystem control mode which corresponds to the first terrain type; the control system comprising one or more processor collectively configured to:
determine a rolling resistance of the vehicle;
determine a moving average of the rolling resistance;
select one of a plurality of mode selection probability maps in dependence on the determined moving average, the plurality of mode selection probability maps each defining a first terrain indicator probability component associated with a first terrain indicator parameter;
determine a first mode selection probability associated with the first terrain type, the first mode selection probability being determined in dependence on the first terrain indicator probability component derived from the selected one of the plurality of mode selection probability maps; and
select one of the plurality of subsystem control modes in dependence on the determined first mode selection probability. The determination of the first mode selection probability is dependent on the selected one of the plurality of mode selection probability maps. At least in certain embodiments, the mode selection probability maps are different from each other. By defining different mode selection probability maps, the first mode selection probability may be modified indirectly. The selection of one of the plurality of mode selection probability may be used to refine the selection of the subsystem control mode.

The rolling resistance of the vehicle is a time varying parameter, i.e. a dynamic parameter which changes with respect to time. The determined rolling resistance may represent a real time value of the rolling resistance. The moving average (also known as the rolling average) of the rolling resistance may be calculated over a pre-determined time period.

The control system comprises one or more controllers collectively comprising at least one electronic processor having an electrical input for receiving an input signal; and at least one memory device electrically coupled to the at least one electronic processor and having instructions stored therein; and wherein the at least one electronic processor is configured to access the at least one memory device and execute the instructions thereon so as to determine the rolling resistance of the vehicle; and determine the moving average of the rolling resistance. The at least one electronic processor is configured to select one of the plurality of mode selection probability maps in dependence on the determined moving average, the plurality of mode selection probability maps each defining a first terrain indicator probability component associated with a first terrain indicator parameter. The at least one electronic processor is configured to determine the first mode selection probability associated with the first terrain type, the first mode selection probability being determined in dependence on the first terrain indicator probability component derived from the selected one of the plurality of mode selection probability maps. The at least one electronic processor is configured to select one of the plurality of subsystem control modes in dependence on the determined first mode selection probability.

The first terrain indicator parameter may be a time varying parameter, i.e. a dynamic parameter which changes with respect to time.

The first terrain indicator parameter may comprise or consist of the rolling resistance of the vehicle. The plurality of mode selection probability maps may each define the first terrain indicator probability component associated with the rolling resistance of the vehicle. One of the plurality of mode selection probability maps is selected in dependence on the determined moving average of the rolling resistance. The first mode selection probability may be determined in dependence on the determined rolling resistance. The determined rolling resistance may represent a real time value of the rolling resistance.

The selection of one of the plurality of mode selection probability maps may comprise comparing the determined moving average of the rolling resistance to a rolling resistance threshold. The rolling resistance threshold may be predefined. In a variant, the rolling resistance threshold may be calculated dynamically. The plurality of mode selection probability maps may comprise at least a first mode selection probability map and a second mode selection probability map. The first mode selection probability map may be selected in dependence on a determination that the moving average of the rolling resistance is greater than the rolling resistance threshold. The second mode selection probability map may be selected in dependence on a determination that the moving average of the rolling resistance is less than the rolling resistance threshold.

The one or more processor may be collectively configured to determine a second terrain indicator probability component in dependence on a second terrain indicator parameter. The second terrain indicator parameter may be a time varying parameter, i.e. a dynamic parameter which changes with respect to time. The first mode selection probability may be determined in dependence on the second terrain indicator probability component. The first mode selection probability may be determined in dependence on at least the first and second terrain indicator probability components. The first terrain indicator parameter and the second terrain indicator parameter may be different from each other.

The second terrain indicator parameter may comprise or consist of a yaw angle of the vehicle. The one or more processor may be collectively configured to receive a yaw angle signal indicating the yaw angle of the vehicle. The second terrain indicator parameter may be determined in dependence on the yaw angle indicated by the yaw angle signal. The one or more processor may apply a hold and step down function to the yaw angle signal to generate a modulated yaw angle signal. The hold and step down function may be configured to hold a peak value of the yaw angle for a calibratable time period and then control a decay of the yaw angle (i.e., a reduction in the yaw angle). The decay of the yaw angle may occur at a calibratable rate. The rate of decay may be constant or non-constant. The decay of the yaw angle may continue until the value is exceeded by the yaw angle indicated by the yaw angle signal. The second terrain indicator probability component may be determined in dependence on the modulated yaw angle signal.

The one or more processor may be collectively configured to determine a third terrain indicator probability component in dependence on a third terrain indicator parameter. The third terrain indicator parameter may be a time varying parameter, i.e. a dynamic parameter which changes with respect to time. The first mode selection probability may be determined in dependence on the third terrain indicator probability component. The first mode selection probability may be determined in dependence on at least the first and third terrain indicator probability components. The second terrain indicator may optionally also be used to determine the first mode selection probability. The first terrain indicator parameter and the third terrain indicator parameter may be different from each other.

The third terrain indicator parameter may comprise a body pitch angle of the vehicle. The one or more processor may be collectively configured to receive a pitch angle signal indicating the body pitch angle of the vehicle. The third terrain indicator parameter may be determined in dependence on the pitch angle indicated by the pitch angle signal. The one or more processor may be collectively configured to apply a hold and step down function to the pitch angle signal to generate a modulated pitch angle signal. The hold and step down function may be configured to hold a peak value of the pitch angle for a calibratable time period and then control a decay of the pitch angle (i.e., a reduction in the pitch angle). The decay of the pitch angle may occur at a calibratable rate. The rate of decay may be constant or non-constant. The decay of the pitch angle may continue until the value is exceeded by the pitch angle indicated by the pitch angle signal. The third terrain indicator parameter may be determined in dependence on the modulated pitch angle signal.

The one or more processor may be collectively configured to control selection of the first subsystem control mode in dependence on one or more entry condition. The one or more processor may be collectively configured to selectively enable and disable selection of the first subsystem control mode in dependence on the or each entry condition. The selection of the first subsystem control mode may be enabled in dependence on a determination that the or each entry condition is satisfied. The selection of the first subsystem control mode may be disabled (or inhibited) in dependence on a determination that the entry condition is not satisfied. The one or more entry condition may comprise one or more of the following: ambient temperature, vehicle speed and terrain roughness.

The one or more entry condition may comprise one or more of the following:
1. An ambient temperature which is greater than or equal to a predetermined temperature threshold.
2. A vehicle reference speed (VREF) which is less than or equal to predetermined speed threshold.
3. A measured terrain roughness which is less than or equal to a predetermined terrain roughness threshold.

According to a further aspect of the present invention there is provided a control system for controlling selection of one of a plurality of subsystem control modes to control operation of at least one vehicle subsystem of a vehicle, each of the subsystem control modes corresponding to one or more different terrain types; wherein the one or more different terrain types comprise a first terrain type corresponding to sand, the subsystem control modes comprising a first subsystem control mode which corresponds to the first terrain type; the vehicle control system comprising one or more processor collectively configured to:
determine a first mode selection probability associated with the first terrain type, the first mode selection probability being determined in dependence on at least one of a first terrain indicator probability component and a second terrain indicator probability component; and
selecting one of the plurality of subsystem control modes in dependence on the determined first mode selection probability;
wherein:
   the first terrain indicator probability component is determined in dependence on a modulated yaw angle signal generated by applying a hold and step down function to a yaw angle signal received from a yaw senor; and
   the second terrain indicator probability component is determined in dependence on a modulated pitch angle signal generated by applying a hold and step down function to a pitch angle signal received from a pitch senor.

The hold and step down function may be configured to hold a peak value of the yaw angle for a calibratable time period and then control a decay of the yaw angle (i.e., a reduction in the yaw angle). The decay of the yaw angle may occur at a calibratable rate. The rate of decay may be constant or non-constant. The decay of the yaw angle may continue until the value is exceeded by the yaw angle indicated by the yaw angle signal.

The hold and step down function may be configured to hold a peak value of the pitch angle for a calibratable time period and then control a decay of the pitch angle (i.e., a reduction in the pitch angle). The decay of the pitch angle may occur at a calibratable rate. The rate of decay may be constant or non-constant. The decay of the pitch angle may continue until the value is exceeded by the pitch angle indicated by the pitch angle signal.

According to a further aspect of the present invention there is provided a control system for controlling selection of one of a plurality of subsystem control modes to control operation of at least one vehicle subsystem of a vehicle, each of the subsystem control modes corresponding to one or more different terrain types; wherein the one or more different terrain types comprise a first terrain type and the subsystem control modes comprise a first subsystem control mode which corresponds to the first terrain type; the vehicle control system comprising one or more processor collectively configured to:
select one of a plurality of mode selection probability maps in dependence on a first terrain indicator parameter, the plurality of mode selection probability maps each defining a first terrain indicator probability component associated with the first terrain indicator parameter;
determine a first mode selection probability associated with the first terrain type, the first mode selection probability being determined in dependence on the first terrain indicator probability component derived from the selected one of the plurality of mode selection probability maps; and
select one of the plurality of subsystem control modes in dependence on the determined first mode selection probability.

The selection of one of the plurality of mode selection probability maps may comprise comparing the first terrain indicator parameter to a threshold. The threshold may be predefined. In a variant, the threshold may be calculated dynamically. The plurality of mode selection probability maps may comprise at least a first mode selection probability map and a second mode selection probability map. The first mode selection probability map may be selected in dependence on a determination that the first terrain indicator parameter is greater than the threshold. The second mode selection probability map may be selected in dependence on a determination that the first terrain indicator parameter is less than the threshold. The one or more processor may be configured to determine a moving average of the first terrain indicator parameter. The moving average of the first terrain indicator parameter may be compared to the threshold to select one of the first and second mode selection probability maps.

The first terrain indicator parameter may comprise a rolling resistance of the vehicle. Alternatively, or in addition, the first terrain indicator parameter may comprise one or more of the following: surface friction and surface roughness.

According to a further aspect of the present invention there is provided a vehicle comprising a control system as described herein.

According to a further aspect of the present invention there is provided a method of controlling selection of one of a plurality of subsystem control modes for controlling the operation of at least one subsystem of a vehicle, each of the subsystem control modes corresponding to one or more different terrain types; wherein the one or more different terrain types comprise a first terrain type corresponding to sand, the subsystem control modes comprising a first subsystem control mode which corresponds to the first terrain type; wherein the method comprises:
determining a rolling resistance of the vehicle;
determining a moving average of the rolling resistance;
selecting one of a plurality of mode selection probability maps in dependence on the determined moving average, the plurality of mode selection probability maps each defining a first terrain indicator probability component associated with a first terrain indicator parameter;
determining a first mode selection probability associated with the first terrain type, the first mode selection probability being determined in dependence on the first terrain indicator probability component derived from the selected one of the plurality of mode selection probability maps; and
selecting one of the plurality of subsystem control modes in dependence on the determined first mode selection probability.

According to a further aspect of the present invention there is provided computer readable instructions which, when executed by one or more processors, cause the one or more processors to perform the method(s) described herein.

According to a further aspect of the present invention there is provided a control system for controlling selection of one of a plurality of subsystem control modes to control operation of at least one vehicle subsystem of a vehicle, each of the subsystem control modes corresponding to one or more different terrain types; wherein the one or more different terrain types comprise a first terrain type, the subsystem control modes comprising a first subsystem control mode which corresponds to the first terrain type; the vehicle control system comprising one or more processor collectively configured to:
determine a first operating parameter of the vehicle;
select one of a plurality of mode selection probability maps in dependence on the determined first operating parameter, the plurality of mode selection probability maps each defining a first terrain indicator probability component associated with a first terrain indicator parameter;
determine a first mode selection probability associated with the first terrain type, the first mode selection probability being determined in dependence on the first terrain indicator probability component derived from the selected one of the plurality of mode selection probability maps; and
select one of the plurality of subsystem control modes in dependence on the determined first mode selection probability.

The first operating parameter may comprise a rolling resistance of the vehicle. Alternatively, or in addition, the first operating parameter may comprise one or more of the following: surface roughness and surface friction. Other operating parameters may be used. The mode selection probability map may be selected in dependence on the rolling resistance of the vehicle. The first terrain type may be a sand terrain, for example terrain comprising or composed of deep sand. The first terrain type may comprise one of the following: Grass/Gravel/Snow; mud and ruts; and rocks.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a schematic representation of a vehicle comprising a control system in accordance with an embodiment of the present invention;
Figure 2 shows a schematic representation of the control system, the drive unit and the subsystems of the vehicle shown in Figure 1;
Figure 3 shows a schematic representation of the controller of the control system shown in Figures 1 and 2;
Figure 4 is a graph showing first and second probability maps defining first and second rolling resistance probability components with respect to a determined rolling resistance;
Figure 5 shows a first plot representing a rolling resistance of a vehicle traversing deep sand;
Figure 6A shows a first graph illustrating the modulation of a body pitch signal by applying a hold and step down function;
Figure 6B shows a second graph illustrating the modulation of a yaw angle signal by applying a hold and step down function;
Figure 7 shows a second plot illustrating a sand mode selection probability generated in dependence on the rolling resistance represented in Figure 5; and
Figure 8 is a block diagram representing a method of determining a sand mode selection probability in dependence on a rolling resistance of the vehicle.

### DETAILED DESCRIPTION

A vehicle control system 1 and a method 400 for controlling operation of at least one vehicle subsystem 3(n) of a vehicle 5 in accordance with an embodiment of the present invention is described herein with reference to the accompanying Figures. As described herein, the vehicle control system 1 comprises a vehicle control unit 7 for controlling operation of the at least one vehicle subsystem 3(n).

The vehicle 5 is described herein with reference to a reference frame comprising a longitudinal axis X, a transverse axis Y and a vertical axis Z. The reference signs herein include a suffix in the form of a whole number to differentiate between a plurality of like components on the vehicle 5. The same suffix is applied for components associated with each other, for example components forming part of the same sub-assembly of the vehicle 5. The integer n is used herein to identify a signal or event relating to a corresponding one of a plurality of features of the vehicle 5.

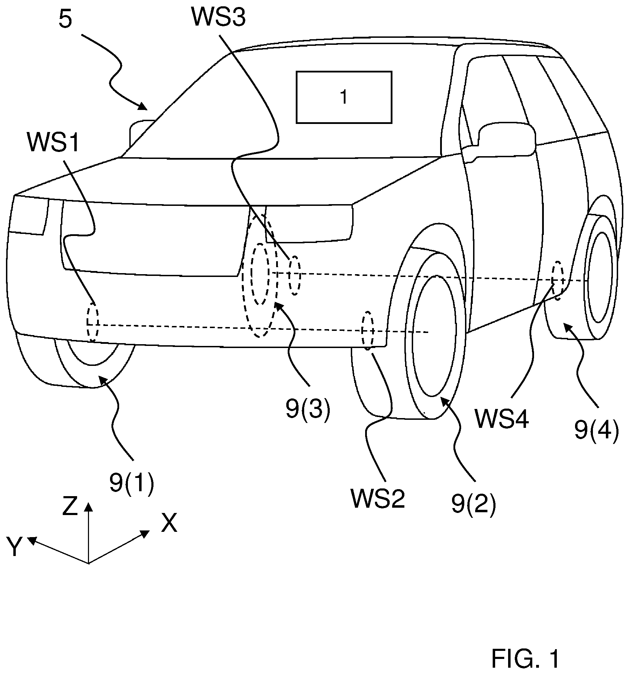

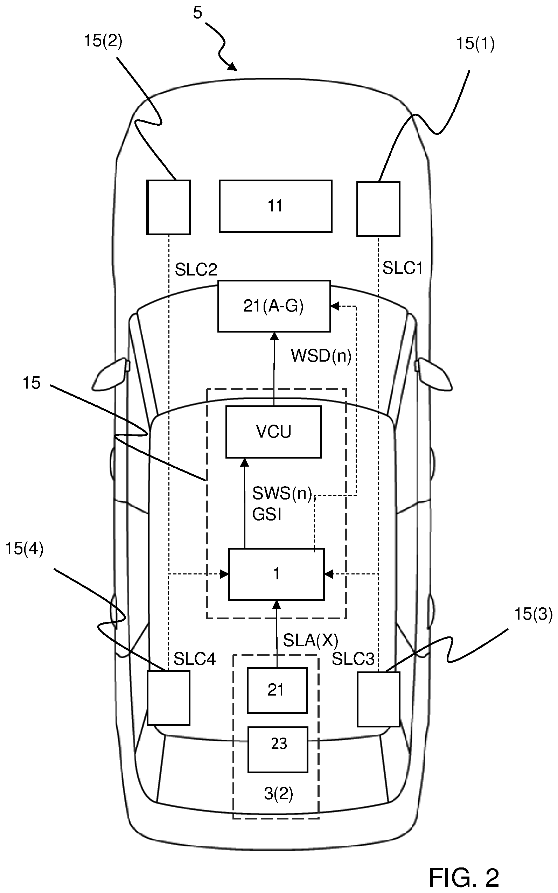

As shown in Figure 1, the control system 1 is installed in a vehicle 5 comprising four (4) wheels 9(1)-9(4). The wheels 9(1)-9(4) comprise first and second front wheels 9(1), 9(2) disposed on a front axle; and first and second rear wheels 9(3), 9(4) disposed on a rear axle. The vehicle 5 is a road vehicle, such as an automobile, a sports utility vehicle (SUV) or a utility vehicle. As shown in Figures 1 and 2, the vehicle 5 in the present embodiment is an automobile. The vehicle 5 comprises one or more torque-generating machine 11, such as an internal combustion engine (ICE) and/or an electric drive unit. The vehicle 5 may be a battery electric vehicle (BEV), a hybrid electric vehicle (HEV), a plug-in hybrid electric vehicle (PHEV) or an internal combustion engine (ICE) vehicle. The front wheels 9(1), 9(2) and/or the rear wheels 9(3), 9(4) may be driven by the one or more torque-generating machine 11. In the present embodiment, the vehicle 5 is two-wheel drive and only the front wheels 9(1)-9(2) are driven. The torque-generating machine 11 comprises an electric drive unit (EDU) 11 for driving the front wheels 9(1), 9(2) of the vehicle 5. Alternatively, or in addition, the rear wheels 9(1), 9(2) of the vehicle 5 may be driven by the electric drive unit 11. The vehicle 5 may comprise more than one electric drive unit 11.

Figures 1 and 2 show the vehicle control system 1 for the vehicle 5. The vehicle 5 is suitable for off-road use, that is for use on terrain other than regular tarmac road surfaces. The vehicle control system 1 controls one or more of the vehicle subsystems 3(n) including, but not limited to, a propulsion (or engine) management system 3(1), a transmission system 3(2), a steering system 3(3), a brakes system 3(4), a suspension system 3(5) and a differential system 3(6). Although five subsystems are illustrated as being under the control of the vehicle control system 1, in practice a greater number of vehicle subsystems 3(n) may be included on the vehicle 5 and may be under the control of the vehicle control system 1. The vehicle 5 comprises a plurality of vehicle sensors 13(n) and are representative of a variety of different parameters associated with vehicle motion and status.

As shown in Figure 2, the transmission system 3(2) comprises a transmission 21 which is operable selectively to engage one of a plurality of drive ratios. The drive ratios typically comprise a plurality of forward drive ratios, a reverse drive ratio and a neutral (or disengaged) drive ratio. The transmission system 3(2) in the present embodiment also includes a transfer case 23 operable selectively to engage a low drive ratio. The transfer case 23 may be omitted from the transmission system 3(2). The suspension system 3(5) in the present embodiment is an adjustable-height suspension. The suspension system 3(5) may, for example, be an air suspension or a mechanically adjustable suspension. The suspension system 3(5) comprises a plurality of adjustable-height suspension units 15(1)-15(4), the adjustable-height suspension units 15(1)-15(4) being associated with the respective wheels 9(1)-9(4) of the vehicle 5. The height of the suspension system 3(5) may be controlled, for example by controllably inflating and deflating one or more air bladder provided in the suspension units 15(1)-15(4), to raise or lower the vehicle body. The differential system 3(6) comprises one or more lockable differential, for example one or more of a centre differential, a rear differential and a front differential. The differential system 3(6) in the present embodiment comprises a centre differential (denoted by the reference numeral 17 in Figure 2).

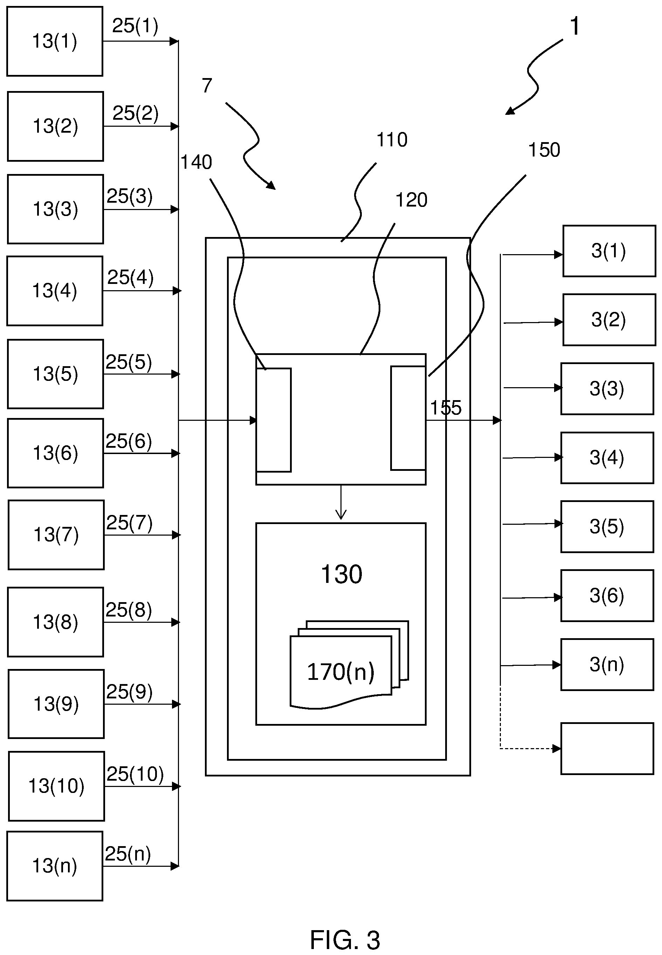

The vehicle control system 1 comprises the vehicle control unit 7. The vehicle control unit 7 as illustrated in Figure 3 comprises one controller 110, although it will be appreciated that this is merely illustrative. The controller 110 comprises processing means 120 and memory means 130. The processing means 120 may be one or more electronic processing device 120 which operably executes computer-readable instructions. The memory means 130 may be one or more memory device 130. The memory means 130 is electrically coupled to the processing means 120. The memory means 130 is configured to store instructions, and the processing means 120 is configured to access the memory means 130 and execute the instructions stored thereon. The controller 110 comprises an input means 140 and an output means 150. The input means 140 may comprise an electrical input 140 of the controller 110. The output means 150 may comprise an electrical output 150 of the controller 110.

The vehicle control unit 7 is configured to output control signals 155 to control one or more of the subsystems 3. The control signals 155 configure the subsystems 3(n) in a manner appropriate to the driving conditions for the vehicle 5. The control signals 155 may, for example, configure the subsystems to control the vehicle 5 in dependence on a determination of a type or class of terrain on which the vehicle is operating (referred to as the terrain condition). The control signals 155 comprise electrical signals 155 which are output from the electrical output 150.

The vehicle control unit 7 receives a plurality of input signals 160 from the vehicle sensors 13(n) provided on the vehicle 5. The input signals 160 are representative of a variety of different parameters associated with vehicle motion and status. The input signals 160 provide, or are used to calculate, a plurality of terrain indicator parameters 165(n) which are indicative of the type or class of terrain on which the vehicle 5 is operating. The vehicle control unit 7 is configured to determine an appropriate control strategy for one or more of the vehicle subsystems 3 in dependence on the terrain indicator parameters 165(n). The vehicle control unit 7 in the present embodiment is configured to classify the terrain as one of the following terrain types: on-road; grass/gravel/snow; mud and ruts; sand; and rocks. The classification of the terrain may be modified, for example to fewer terrain types or additional terrain types.

A plurality of subsystem control modes 170(n) are predefined. Each of the plurality of subsystem control modes 170(n) corresponds to one of the terrain types. The vehicle control unit 7 is configured to select one of the plurality of subsystem control modes 170(n) in dependence on one or more of the plurality of terrain indicator parameters 165(n). A mode selection probability (weighting) 31(n) is calculated for each of the subsystem control modes 170(n) in dependence on the terrain indicator parameters 165(n). The vehicle control unit 7 selects one of the subsystem control modes 170(n) in dependence on the calculated mode selection probabilities. The mode selection probabilities for the subsystem control modes 170(n) are compared with each other to determine which one of the plurality of subsystem control modes 170(n) is suitable for the current operating conditions. The vehicle control unit 7 may, for example, integrate the mode selection probability 31(n) of each of the subsystem control modes 170(n). The integration may determine a "positive difference" between the calculated mode selection probability 31(n) of the current selected subsystem control mode 170(n) and the calculated mode selection probability 31(n) of each of the other subsystem control modes 170(n). The vehicle control unit 7 may change the selected subsystem control mode 170(n) when the integration value exceeds a predetermined threshold, or the current subsystem control mode selection probability 31(n) is equal to zero or below a predetermined threshold.

Each of the plurality of subsystem control modes 170(n) are associated with a corresponding one of the terrain classifications. The subsystem control modes 170(n) comprise the following: general driving control mode 170(1); Grass/Gravel/Snow (GGS) control mode 170(2); mud and ruts control mode 170(3); sand control mode 170(4); and rock crawl control mode 170(5). The general driving control mode 170(1) is appropriate for on-road driving and may, for example, configure the suspension to prioritise comfort. The Grass/Gravel/Snow (GGS) control mode 170(2) may adapt throttle response and configures the transmission to prioritise traction. The mud and ruts control mode 170(3) may allow increased wheel spin to enable traversal of muddy terrain. The sand control mode 170(4) may map the throttle to response to help maintain momentum through sand. The rock crawl control mode 170(5) may comprise configuring a throttle map or a torque map of the electric drive unit 11 for performing rock-crawl manoeuvres. In the case of a vehicle 5 comprising an internal combustion engine, the rock crawl control mode may comprise selecting a low transmission ratio (for example by engaging a transfer case).

The sensors 13(n) are configured to measure an operating parameter of the vehicle 5 and to output a sensor signal 25(n) providing an indication of the measured operating parameter. The sensor signals 25(n) are supplied to the vehicle control unit 7 as the input signals 160. The sensor signals 25(n) are electrical signals. The sensors 13(n) in the present embodiment are configured to provide a continuous (i.e., an uninterrupted) indication of the operating parameter. The sensor signals 25(n) may provide a quantized representation of the measured operating parameter.

The sensors 13(n) in the present embodiment comprise: wheel speed sensors 13(1) for measuring the speed of each of the wheels 9(1)-9(4); a body pitch sensor 13(2); a yaw sensor 13(3); a longitudinal acceleration sensor 13(4); an ambient temperature sensor 13(5); a torque sensor (or torque estimator) 13(6); a gradient sensor (or gradient estimator) 13(7); a brake pedal position sensor 13(8); an acceleration pedal position sensor 13(9); and longitudinal, lateral, vertical motion sensors 13(10). The wheel speed sensors 13(1) output a wheel speed signal 25(1) indicating the measured wheel speeds of each wheel 9(1)-9(4). The body pitch sensor 13(2) outputs a body pitch signal 25(2) indicating a measured body pitch angle of the vehicle 5 (i.e. a measured rotation of the vehicle 5 about the transverse axis Y). The yaw sensor 13(3) outputs a yaw signal 25(3) indicating a measured yaw angle of the vehicle 5 (i.e. a measured rotation of the vehicle 5 about the vertical axis Z). The longitudinal acceleration sensor 13(4) outputs a longitudinal acceleration signal 25(4) indicating a measured longitudinal acceleration of the vehicle 5 (i.e. acceleration of the vehicle 5 along the longitudinal axis X). The ambient temperature sensor 13(5) outputs an ambient temperature signal 25(4) indicating a measured temperature of the vehicle 5. The torque sensor 13(6) outputs a torque signal 25(6) indicating a torque (Nm) generated by the electric drive unit 11 (and/or an internal combustion engine). The gradient sensor 13(7) outputs a gradient signal 25(7) indicating a measured or estimated gradient of the surface on which the vehicle 5 is operating. The brake pedal sensor 13(8) outputs a brake pedal signal 25(8) indicating a position of the brake pedal (not shown), for example indicating an extent to which the brake pedal is depressed. The accelerator pedal sensor 13(9) outputs an accelerator pedal signal 25(9) indicating a position of the accelerator pedal (not shown), for example indicating an extent to which the accelerator pedal is depressed. The longitudinal, lateral, vertical motion sensors 13(10) output motion signals indicating the motion of the vehicle 5 along each reference axis X, Y, Z. The vehicle 5 may comprise an inertial measurement unit (not shown). The inertial measurement unit may, for example, comprise one or more accelerometer. One or more of the pitch sensor 13(2), the yaw sensor 13(3), the longitudinal acceleration sensor 13(4) and the longitudinal, lateral, vertical motion sensors 13(10) may be incorporated into the inertial measurement unit.

As outlined above, the vehicle control unit 7 is configured to select one of the plurality of subsystem control modes 170(n) corresponding to the current type or classification of terrain. A mode selection probability (weighting) 31(n) is determined for each of the subsystem control modes 170(n). The mode selection probability 31(n) provide an indication of the likelihood that the associated subsystem control mode 170(n) is appropriate for the type or class of terrain on which the vehicle 5 is operating. The mode selection probabilities 31(n) may, for example, comprise one or more of the following:
1. A general driving mode selection probability 31(1) associated with the general driving control mode 170(1).
2. A Grass/Gravel/Snow (GGS) mode selection probability 31(2) associated with the Grass/Gravel/Snow control mode 170(2).
3. A mud and ruts mode selection probability 31(3) associated with the mud and ruts control mode 170(3).
4. A sand mode selection probability 31(4) associated with the sand control mode 170(4).
5. A rock crawl mode selection probability 31(5) associated with the rock crawl control mode 170(5).

The mode selection probabilities 31(n) are determined in dependence on one or more of the terrain indicator parameters 165(n). As described herein, the terrain indicator parameters 165(n) may be derived from the operating parameters measured by the sensors 13(n). Alternatively, or in addition, the mode selection probability 31(n) may be determined in dependence on one or more probability maps 29(n). The or each probability map 29(n) may define a terrain indicator probability component 33(A-E) associated with one of the terrain indicator parameters 165(n). The mode selection probability 31(n) is determined with respect to the one or more terrain indicator probability component 33(A-E).

The operation of the vehicle control unit 7 is described herein with particular reference to the sand control mode 170(4). The sand control mode 170(4) is selected to configure one or more of the subsystems 3(n) for vehicle operation on terrain classified as being sand, for example on sand dunes. It will be understood that the methods and systems described herein may be used in the selection of one of the other control modes 170(n). As described herein, the sand mode selection probability 31(4) is determined in dependence on a rolling resistance (Nm) 90 of the vehicle 5. The rolling resistance 90 represents the force resisting the motion of the vehicle 5 on the terrain. The rolling resistance 90 on a flat surface (i.e., no gradient) may be calculated using the following equation: ${F}_{rr} = f ⋅ m ⋅ g$ [1] Whereby:
Frr is the rolling resistance force (Nm);
f is the coefficient of rolling resistance;
m is the vehicle mass (kg); and
g is the gravitational acceleration (9.81 m/s²).

The calculation for the rolling resistance 90 on an inclined surface (at a gradient α) may be calculated using the following equation: ${F}_{rr} = f ⋅ m ⋅ g ⋅ cos \left(α\right)$ [2] Whereby:
Frr is the rolling resistance force (Nm);
f is the coefficient of rolling resistance;
m is the vehicle mass (kg);
g is the gravitational acceleration (9.81 m/s²); and
a is the gradient (°).

The coefficient of rolling resistance f is greater for a surface, such as sand, which is deformable. The rolling resistance 90 increases when the vehicle 5 is traversing a terrain having a deformable surface, for example terrain which comprises or is composed of sand. In the present example, the terrain is in the form of sand dunes. The sand dunes are typically composed of sand which is relatively deep. The sand dunes may be composed of sand having a depth greater than or equal to 150mm. Sand having a depth greater than 150mm is referred to herein as "deep sand". It will be understood that the sand may have a depth which is less than or greater than 150mm. The sand mode selection probability 31(4) may be increased in dependence on a determination that the rolling resistance 90 is above a threshold value to promote selection of the sand control mode 170(4).

When traversing terrain which is predominantly composed of sand, it has been recognised that there are variations in the surface conditions which influence the rolling resistance 90. These variations may comprise localised regions having mechanical properties which are different from the surrounding area(s). The localised regions may, for example, be less deformable than the surrounding area. The localised region(s) may comprise a hard-packed surface which is less deformable than the surrounding sand. Alternatively, or in addition, the localised region may be composed of sand having a different depth than the surrounding area, for example a reduced depth compared to the surrounding area. The changes in the surface conditions result in variations in the rolling resistance 90 of the vehicle 5. The rolling resistance 90 may, for example, decrease as the vehicle 5 crosses localised regions having a relatively hard surface and/or a reduced depth. The reduction in the rolling resistance 90 may reduce the sand mode selection probability 31(4). For example, the sand mode selection probability 31(4) may decrease in dependence on a determination that the rolling resistance 90 is below a rolling resistance threshold value. The decrease in the sand mode selection probability 31(4) may cause the vehicle control unit 7 to de-select the sand control mode 170(4) and select one of the other subsystem control modes 170(n). The vehicle control unit 7 may, for example, change from the sand control mode 170(4) to the general driving control mode 170(1). The change in the selected subsystem control mode 170(n) may be inappropriate, for example if the change is the result of a localised change in the surface conditions. In the above example, the general driving mode 170(1) may not be appropriate if the vehicle 5 traverses the localised region of the terrain having a less deformable surface and then returns to sand which can be more readily deformed.

The selection or de-selection of subsystem control modes 170(n) due to localised variations in the surface conditions may be inappropriate in certain circumstances. In order to reduce or prevent the inappropriate selection and/or de-selection of subsystem control modes 170(n), a plurality of the probability maps 29(n) are defined. The plurality of probability maps 29(n) are stored in the memory device 130 and accessed by the controller 110. Each of the probability maps 29(n) define a relationship between a terrain indicator probability component 33(A-E) and an associated terrain indicator parameter 165(n). The subsystem mode selection probability 31 may be determined in dependence on one or more of the terrain indicator probability components 33(A-E). In the present embodiment, the plurality of probability maps 29(n) each define a rolling resistance probability component 33(A) associated with the rolling resistance 90 of the vehicle 5. As described herein, the sand mode selection probability 31(4) is determined in dependence on the rolling resistance probability component 33(A) defined by the probability maps 29(n).

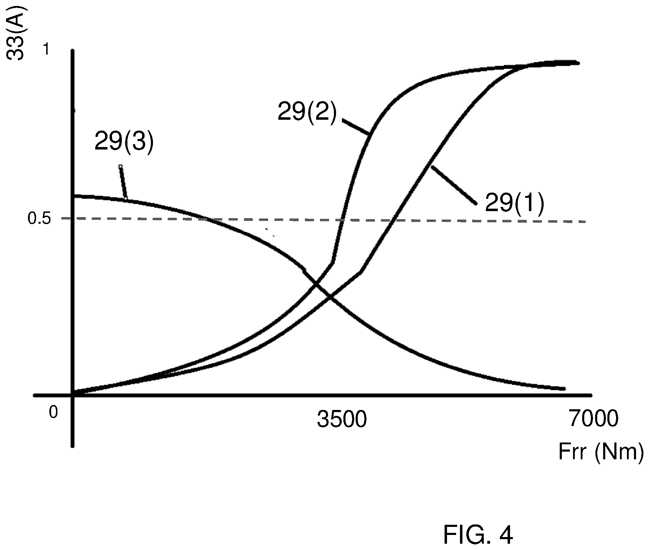

In the present embodiment, the plurality of probability maps 29(n) comprise at least first and second probability maps 29(1), 29(2). The first and second probability maps 29(1), 29(2) each define the rolling resistance probability component 33(A) with respect to the rolling resistance 90. The first and second probability maps 29(1), 29(2) are different from each other. As described herein, the rolling resistance probability component 33(A) is determined in dependence on a selected one of the first and second probability maps 29(1), 29(2). The first and second probability maps 29(1), 29(2) are illustrated in Figure 4 by way of example. The first probability map 29(1) defines a first relationship between the rolling resistance probability component 33(A) and the rolling resistance 90. The first probability map 29(1) represents a standard (or default) probability map for determining the sand mode selection probability 31(4). The second probability map 29(2) defines a second relationship between the rolling resistance probability component 33(A) and the rolling resistance 90. The second probability map 29(2) represents a modified probability map for determining the sand mode selection probability 31(4) when the vehicle 5 is operating in deep sand. One of the first and second probability maps 29(2) is selected in dependence on the determined rolling resistance 90 of the vehicle 5. As described herein, one of the first and second probability maps 29(1), 29(2) is selected in dependence on a moving average of the determined rolling resistance 90.

The first probability map 29(1) represents a default rolling resistance probability component 33(A) for determining the sand mode selection probability 31(4). The second probability map 29(2) represents a non-standard rolling probability component 33(A) for determining the sand mode selection probability 31(4) when the vehicle is operating in deep sand (for example when the vehicle 5 is traversing sand dunes). As shown in Figure 4, the first and second probability maps 29(1), 29(2) comprise respective first and second functions which define the relationship between the rolling resistance probability component 33(A) and the rolling resistance 90 of the vehicle 5. The rolling resistance probability component 33(A) defined by the first and second probability maps 29(1), 29(2) increases as the rolling resistance 90 increases. The relationship between the rolling resistance probability component 33(A) and the rolling resistance 90 is non-linear in the present embodiment. As illustrated in Figure 4, the first and second probability maps 29(1), 29(2) each comprise an S-shaped curve (an S-curve). The S-shaped curves each comprise a convex portion and a concave portion connected by a central (transition) portion. The central portion of the second probability map 29(2) has a slope (gradient) which is greater than that of the corresponding central portion of the first probability map 29(1). The rolling resistance probability component 33(A) defined by the second probability map 29(2) increases more quickly with respect to the rolling resistance 90 than the rolling resistance probability component 33(A) defined by the first probability map 29(1). By way of comparison a third probability map 29(3) is shown in Figure 4. The third probability map 29(3) represents a rolling resistance probability component 33(B) for determining the Grass/Gravel/Snow (GGS) mode selection probability 31(2) with respect to the rolling resistance 90. The Grass/Gravel/Snow (GGS) mode selection probability 31(2) is determined in dependence on the rolling resistance probability component 33(B). The rolling resistance probability component 33(B) defined by the third probability map 29(3) decreases as the rolling resistance 90 increases. The third probability map 29(3) comprises an inverted S-shaped curve (an inverted S-curve). It will be understood that additional probability maps 29(n) may be defined.

The vehicle control unit 7 is configured to select one of the plurality of probability maps 29(n) to determine the terrain indicator probability component 33(A-E). The selection of one of the plurality of probability maps 29(n) is performed in dependence on one or more of the terrain indicator parameters 165(n). In the present embodiment, one of the first and second probability maps 29(1), 29(2) is selected in dependence on a moving average 95 of the rolling resistance 90 (referred to herein as the rolling resistance moving average 95). The vehicle control unit 7 is configured to calculate the rolling resistance moving average 95 over a predetermined time period, for example 2 seconds, 3 seconds, 5 seconds or 10 seconds. The time period may be calibrated, for example in dependence on empirical data. The rolling resistance moving average 95 is compared to a rolling resistance threshold TH1. The rolling resistance threshold TH1 is defined as 2000Nn in the present embodiment. The rolling resistance threshold TH1 may be greater than or less than 2000Nm. The determination of an appropriate rolling resistance threshold TH1 is described herein with respect to sample data acquired when the vehicle 5 is operating on terrain comprising or composed of sand. The first probability map 29(1) is selected in dependence on a determination that the rolling resistance moving average 95 is less than the rolling resistance threshold TH1. The second probability map 29(2) is selected in dependence on a determination that the rolling resistance moving average 95 is greater than the rolling resistance threshold TH1.

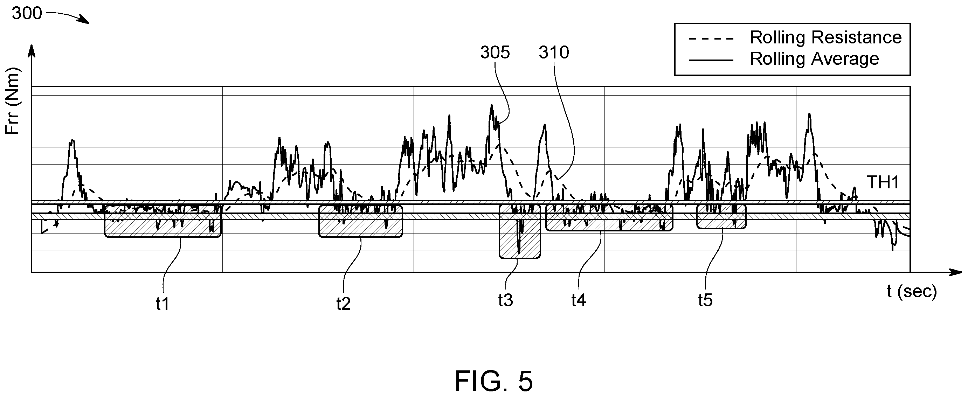

A first plot 300 illustrating a set of sample data is shown in Figure 5. The sample data represents the rolling resistance 90 as the vehicle 5 traverses terrain comprising or composed of deep sand, for example as the vehicle 5 traverses sand dunes. A first plot line 305 represents an instantaneous value of the rolling resistance 90 of the vehicle 5. A second plot line 310 represents the rolling resistance moving average 95. As illustrated in Figure 5, the rolling resistance 90 comprises short-term fluctuations as the vehicle 5 traverses the deep sand. The short-term fluctuations in the rolling resistance 90 comprise peaks and troughs which may be caused by localised variations in the terrain. The troughs in the first trace 305 represent a short-term decrease in the rolling resistance 90, for example caused by the vehicle 5 traversing a region of packed sand. Conversely, the peaks in the first trace 305 represent a short-term increase in the rolling resistance 90, for example caused by the vehicle 5 traversing a region of sand having a greater depth. Even though the type of terrain does not change, the short-term fluctuations in the rolling resistance 90 may reduce the sand mode selection probability 31(4). The reduced sand mode selection probability 31(4) increases the likelihood of one of the other subsystem control modes 170(n) being selected. In the illustrated example, it has been determined that there is an increased likelihood that the general driving control mode 170(1) will be selected in place of the sand control mode 170(4) when the rolling resistance drops below 4000Nm. The zones t1-t5 highlighted in the first plot 300 represent operating windows in the sample data in which the general drive control mode 170(1) may be selected instead of the sand control mode 170(4). The change to the general drive control mode 170(1) is appropriate if the mode selection probability 31(n) has changed due to a change in the terrain, for example a change in the terrain type from sand to road. However, in this example the selection of the general driving control mode 170(1) is not appropriate since the type of terrain is unchanged. Rather, the reduced sand mode selection probability 31(4) is caused, at least partly, by the short-term fluctuations in the rolling resistance 90.

As illustrated in Figure 5, the rolling resistance moving average 95 is calculated to reduce or remove short-term fluctuations. The calculation of the rolling resistance moving average 95 effectively filters the rolling resistance 90. The rolling resistance moving average 95 is then compared to the rolling resistance threshold TH1 to select one of the plurality of probability maps 29(n). The rolling resistance threshold TH1 is defined to reduce the influence of the short-term fluctuations in the rolling resistance 90 to the sand mode selection probability 31(4). In the present embodiment, the rolling resistance threshold TH1 is defined as 2000Nm. As shown in Figure 5, the short-term fluctuations in the rolling resistance 90 decrease below the rolling resistance threshold TH1 within the sample data. However, the rolling resistance moving average 95 remains greater than the rolling resistance threshold TH1 for the majority of the sample data.

The vehicle control unit 7 is configured to select one of the first and second probability maps 29(1), 29(2) in dependence on the rolling resistance moving average 95. The rolling resistance moving average 95 is compared to the rolling resistance threshold TH1 to select one of the first and second probability maps 29(1), 29(2). The first probability map 29(1) is selected in dependence on a determination that the rolling resistance moving average 95 is less than the rolling resistance threshold TH1. The second probability map 29(2) is selected in dependence on a determination that the rolling resistance moving average 95 is greater than the rolling resistance threshold TH1. The rolling resistance 90 is then compared to the selected one of the first and second probability maps 29(1), 29(2) to determine the rolling resistance probability component 33(A). The rolling resistance probability component 33(A) is thereby determined in dependence on the instantaneous (i.e., the current) rolling resistance 90 of the vehicle 5. The sand mode selection probability 31(4) is determined in dependence on the rolling resistance probability component 33(A) derived from the selected one of the first and seconds probability maps 29(1), 29(2).

The determined sand mode selection probability 31(4) is compared to a determined mode selection probability 31(n) for each of the other subsystem control modes 170(n). The vehicle control unit 7 is configured to select one of the plurality of subsystem control modes 170(n) in dependence on the determined mode selection probabilities 31(n). As described herein, the vehicle control unit 7 integrates the determined mode selection probabilities 31(n) for each of the subsystem control modes 170(n). The integration determines a positive difference between the mode selection probability 31(n) of the selected subsystem control mode 170(n) and the mode selection probability 31(n) of each of the other subsystem control modes 170(n). The subsystem control mode 170(n) having the largest positive difference is selected. The vehicle control unit 7 is configured to output the control signal 155 to control one or more of the subsystems 3. The control signal 155 indicates the selected one of the subsystem control modes 170(n). The subsystems 3 are controlled in dependence on the control signal 155.

It will be understood that different terrain indicator parameters 165(n) may be used for the selection of the probability map 29(n) and the determination of the terrain indicator probability component 33(A-E). A first terrain indicator parameter 165(n) may be used to select the probability map 29(n); and a second terrain indicator parameter 165(n) may be used to traverse the selected probability map 29(n) to determine the terrain indicator probability component 33(A-E). The first and second terrain indicator parameters 165(n) are different from each other. However, in relation to determining the rolling resistance probability component 33(A), the rolling resistance 90 (and the rolling resistance moving average 95) is suitable for determining the rolling resistance probability component 33(A).

The rolling resistance probability component 33(A) may be derived directly from the selected one of the first and second probability maps 29(1), 29(2). The sand mode selection probability 31(4) is determined in dependence on the rolling resistance probability component 33(A). The sand mode selection probability 31(4) may be determined in dependence on one or more terrain indicator parameter 165(n). The one or more terrain indicator parameter 165(n) may consist of the rolling resistance 90. The sand mode selection probability 31(4) may correspond to the rolling resistance probability component 33(A). Alternatively, the sand mode selection probability 31(4) may be determined in dependence on a plurality of the terrain indicator parameter 165(n). The sand mode selection probability 31(4) may be determined in dependence on a plurality of the rolling resistance probability component 33(A). The or each rolling resistance probability component 33(A) may be determined in dependence on one or more of the plurality of terrain indicator parameter 165(n). The sand mode selection probability 31(4) may be determined by summing the plurality of the rolling resistance probability component 33(A).

The determination of the sand mode selection probability 31(4) is described above with reference to the determination of a rolling resistance probability component 33(A) in dependence on the rolling resistance 90 of the vehicle 5. Alternatively, or in addition, the sand mode selection probability 31(4) may be determined in dependence on other terrain indicator parameters 165(n), such as the body pitch angle and/or the yaw angle of the vehicle 5. As outlined above, the body pitch signal 25(2) indicates a measured body pitch angle α; and the yaw signal 25(3) indicates a measured yaw angle γ. A pitch angle probability component 33(B) may be determined in dependence on the body pitch angle of the vehicle 5. The pitch angle probability component 33(B) may be proportional to a magnitude of the pitch angle or a rate of change of the pitch angle. Alternatively, or in addition, a yaw angle probability component 33(C) may be determined in dependence on the yaw angle of the vehicle 5. The yaw angle probability component 33(C) may be proportional to a magnitude of the yaw angle or a rate of change of the yaw angle. The sand mode selection probability 31(4) may be determined in dependence on one or more of the rolling resistance probability component 33(A); the pitch angle probability component 33(B); and the yaw angle probability component 33(C). The sand mode selection probability 31(4) may, for example, comprise the sum of the rolling resistance probability component 33(A); the pitch angle probability component 33(B); and the yaw angle probability component 33(C).

The measured body pitch angle and the measured yaw angle typically comprise short-term fluctuations. These short-term fluctuations may result in variations in one or more of the mode selection probabilities 31(n). It has been determined that these variations may result in the inappropriate selection or de-selection of one or more of the subsystem control modes 170(n). In particular, it has been determined that the sand control mode 170(4) may be selected or de-selected due to the short-term fluctuations in the measured body pitch angle and the measured yaw angle.

The vehicle control unit 7 in the present embodiment is configured to modulate one or more of the sensor signals 25(n) to generate the terrain indicator parameters 165(n). In the present embodiment, the vehicle control unit 7 is configured to perform hold and step down signal modulation to one or more of the sensor signals 25(n). The hold and step down signal modulation comprises holding a peak value in the sensor signal 25(n) for a calibratable time period and then controlling the decay of the sensor 25(n) at a calibratable rate until it is again exceeded by the input sensor signal 25(n). The hold and step down signal modulation is performed in respect of each peak in the operating parameter. The reduction in the magnitude of the sensor signal 25(2) is interrupted by a peak having a larger magnitude than the modulated signal. The mode selection probability associated with each of the plurality of subsystem control modes 170(n) is calculated in dependence on the modulated sensor signal 25(n). The hold and step down signal modulation is effective in extending the duration of peaks in the operating parameter. This may help to reduce short-period fluctuations in the calculated mode selection probability of each of subsystem control modes 170(n). This may reduce or suppress changes in the subsystem control mode 170(n). The vehicle control unit 7 is configured to apply the hold and step down function to the body pitch signal 25(2) to generate a modulated body pitch signal 25'(2). Alternatively, or in addition, the vehicle control unit 7 is configured to apply the hold and step down function to the yaw signal 25(3) to generate a modulated yaw signal 25'(3).

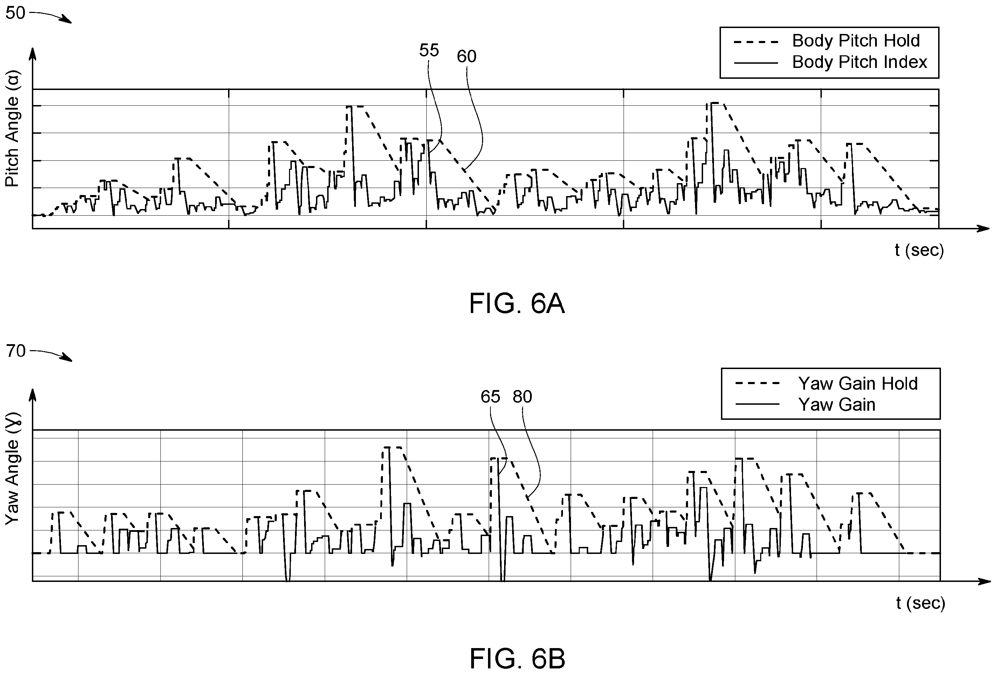

The hold and step down signal modulation is illustrated in Figures 6A and 6B with reference to the body pitch signal 25(2) and the yaw signal 25(3). A first graph 50 is shown in Figure 6A by way of example. The first graph 50 comprises a first body pitch trace 55 representing the raw body pitch signal 25(2) received from the body pitch sensor 13(2); and a second body pitch trace 60 representing a modulated body pitch signal 25'(2). A second graph 70 is shown in Figure 6B by way of example. The second graph 70 comprises a first yaw angle trace 75 representing the yaw angle signal 25(3) received from the yaw angle sensor 13(3); and a second yaw angle trace 80 representing a modulated yaw angle signal 25'(3). The vehicle control unit 7 is configured to determine the pitch angle probability component 33(B) in dependence on the modulated body pitch signal 25'(2); and to determine the yaw angle probability component 33(C) in dependence on the modulated yaw angle signal 25'(3).

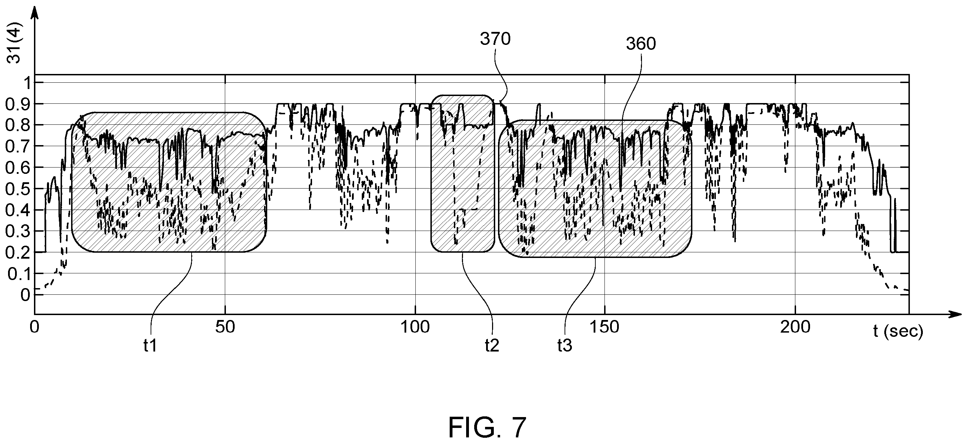

A second plot 350 illustrating the sand mode selection probability 31(4) is shown in Figure 7. The second plot 350 is compiled using the sample data represented in the first plot 300. As described herein, the sample data is captured when the vehicle 5 is operating on deep sand, for example as the vehicle 5 traverses sand dunes. A first trace 360 represents the sand mode selection probability 31(4) generated in dependence on the pitch angle probability component 33(B) and the yaw angle probability component 33(C) generated using the modulated body pitch signal 25'(2) and the modulated yaw pitch signal 25'(3). For comparison, a second trace 370 represents a reference sand mode selection probability 31(4) generated in dependence on the raw body pitch signal 25(2) and the raw yaw pitch signal 25'(3). The second trace 370 comprises three zones t1-t3 in which the reference sand mode selection probability 31(4) decrease due to surface conditions. In each of the zones t1-t3, the reference sand mode selection probability 31(4) is less than 0.5. The decrease in the sand mode selection probability 31(4) increases the likelihood that the sand control mode 170(3) will be de-selected in favour of one of the other subsystem control modes 170(n). In contrast, the first trace 370 represents a sand mode selection probability 31(4) which is consistently greater than 0.5. Moreover, the sand mode selection probability 31(4) generated in dependence on the modulated body pitch signal 25'(2) and the modulated yaw signal 25'(3) comprises fewer short-term fluctuations. The likelihood of an inappropriate (or improper) selection or de-selection of the sand control mode 170(4) may be reduced.

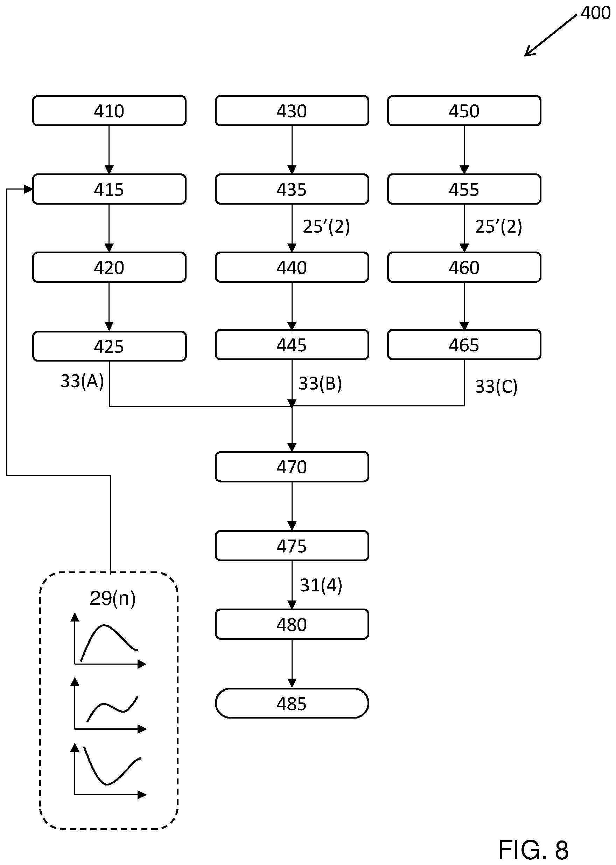

At least in certain embodiments, the technique(s) described herein may be combined to control selection of the sand control mode 170(4). The sand mode selection probability 31(4) may be determined in dependence on a plurality of terrain indicator parameters 165(n). The plurality of terrain indicator parameters 165(n) may comprise one or more of the following: the rolling resistance 90, the body pitch angle and the body yaw angle. Driving on sand results in unique driving events which can be identified to indicate the terrain type. For example, a high yaw gain and/or a regular body pitch are indicators that the vehicle 5 is operating on sand. A separate terrain indicator probability component 33(A-E) may be determined for each of the plurality of terrain indicator parameters 165(n). The sand mode selection probability 31(4) is determined in dependence on each of the terrain indicator probability components 33(A-E). For example, the sand mode selection probability 31(4) may be determined by summing the separate terrain indicator probability components 33(A-E). The sand mode selection probability 31(4) is then compared to the other mode selection probabilities 31(n) to select the subsystem control mode 170(n). A block diagram representing the method 400 of implementing these functions is shown in Figure 8. In the illustrated arrangement, the sand mode selection probability 31(4) is determined in dependence on the rolling resistance 90 and at least one of the body pitch angle and the body yaw angle.

The method 400 comprises determining a rolling resistance 90 of the vehicle 5 (BLOCK 405). A rolling resistance moving average 95 is determined in dependence on the rolling resistance 90 (BLOCK 410). One of a plurality of probability maps 29(n) is selected (BLOCK 415). The plurality of probability maps 29(n) are predefined and each define a relationship between a terrain indicator probability component 33(A-E) and one or more terrain indicator parameter 165(n). In the illustrated arrangement, the probability map 29(n) is selected from one of three (3) predefined probability maps 29(1)-29(3). The rolling resistance moving average 95 may be compared to one or more rolling resistance thresholds TH1 to select the probability map 29(n). It will be understood that less than or more than three (3) probability maps 29(1)-29(3) may be defined. The probability map 29(n) is selected in dependence on the rolling resistance moving average 95. A rolling resistance probability component 33(A) is determined in dependence on the selected probability map 29(n) (BLOCK 420). The rolling resistance probability component 33(A) is derived from the selected probability map 29(n) in dependence on the (instantaneous) rolling resistance 90 of the vehicle 5. The rolling resistance probability component 33(A) is output (BLOCK 425).

The body pitch signal 25(2) is received from the body pitch sensor 13(2) (BLOCK 430). The body pitch signal 25(2) is an unfiltered electrical signal representing the body pitch angle. The body pitch signal 25(2) is modulated by applying a hold and step down function (BLOCK 435). A pitch angle probability component 33(B) is determined in dependence on the modulated body pitch signal 25'(2) (BLOCK 440). The pitch angle probability component 33(B) may be increased in dependence on the detection of a pitch angle event which is indicative of traversing sand dunes. The pitch angle event may be detected by identifying a signature pattern in the body pitch angle. The signature pattern may, for example, have a predefined frequency and/or magnitude. The signature pattern may be defined with respect to a frequency range and/or a magnitude range. The pitch angle probability component 33(B) is output (BLOCK 445).

The yaw angle signal 25(3) is received from the yaw angle sensor 13(3) (BLOCK 450). The yaw angle signal 25(3) is an unfiltered electrical signal representing the yaw angle. The yaw angle signal 25(3) is modulated by applying a hold and step down function (BLOCK 455). A yaw angle probability component 33(C) is determined in dependence on the modulated body pitch signal 25'(3) (BLOCK 460). The yaw angle probability component 33(C) may be increased in dependence on the detection of a yaw angle event which is indicative of traversing sand dunes. The yaw angle event may be detected by identifying a signature pattern in the yaw angle. The signature pattern may, for example, have a predefined frequency and/or magnitude. The signature pattern may be defined with respect to a frequency range and/or a magnitude range. The yaw angle probability component 33(C) is output (BLOCK 465).

The sand mode selection probability 31(4) is determined in dependence on the rolling resistance probability component 33(A), the pitch angle probability component 33(B) and the yaw angle probability component 33(C) (BLOCK 470). The sand mode selection probability 31(4) is output (BLOCK 475). The mode selection probabilities 31(n) are compared to each other (BLOCK 480). The control mode 170(n) corresponding to the terrain having the largest mode selection probability 31(n) is selected (BLOCK 485).

It will be understood that the mode selection probabilities 31(n) may be determined in dependence in other terrain indicator parameters 165(n). The mode selection probability 31(n) may be determined in dependence on a surface roughness. A surface roughness probability component 33(D) may be determined in dependence on a measured surface roughness. The surface roughness probability component 33(D) may decrease as the surface roughness increases. The mode selection probability 31(n) may be determined in dependence on a surface friction. A surface friction probability component may be determined in dependence on an estimated surface friction. Alternatively, or in addition, the mode selection probability 31(n) may be determined in dependence on a vehicle speed. A vehicle speed probability component 33(E) may be determined in dependence on the vehicle speed. The vehicle speed probability component 33(D) may decrease as the vehicle speed increases. The sand mode selection probability 31(4) may, for example, be determined in dependence on one or more of the following: the rolling resistance probability component 33(A), the pitch angle probability component 33(B), the yaw angle probability component 33(C) (BLOCK 470), the surface roughness probability component 33(D) and the vehicle speed probability component 33(E).

One or more entry conditions may be defined for selecting the subsystem control modes 170(n). For example, one or more of the vehicle speed, the ambient temperature and the surface roughness may be used as entry conditions. The selection of the sand control mode 170(4) may be controlled in dependence on the entry condition(s) being satisfied. For example, selection of the sand control mode 170(4) may be disabled (inhibited) in dependence on a determination that the vehicle speed is greater than a speed threshold. Selection of the sand control mode 170(4) may be enabled in dependence on a determination that the vehicle speed is less than the speed threshold. Alternatively, or in addition, selection of the sand control mode 170(4) may be disabled (inhibited) in dependence on a determination that the ambient temperature is less than a predefined temperature threshold, for example 15°C. Selection of the sand control mode 170(4) may be enabled in dependence on a determination that the ambient temperature is greater than a predefined temperature threshold. Alternatively, or in addition, selection of the sand control mode 170(4) may be disabled (inhibited) in dependence on a determination that the surface roughness is greater than a predefined surface roughness threshold. Selection of the sand control mode 170(4) may be enabled in dependence on a determination that the surface roughness is less than the predefined surface roughness threshold.

It will be appreciated that various changes and modifications can be made to the present invention without departing from the scope of the present application.

## Claims

1. A control system for controlling selection of one of a plurality of subsystem control modes to control operation of at least one vehicle subsystem of a vehicle, each of the subsystem control modes corresponding to one or more different terrain types; wherein the one or more different terrain types comprise a first terrain type corresponding to sand, the subsystem control modes comprising a first subsystem control mode which corresponds to the first terrain type; the control system comprising one or more processor collectively configured to:
determine a rolling resistance of the vehicle;
determine a moving average of the rolling resistance;
select one of a plurality of mode selection probability maps in dependence on the determined moving average, the plurality of mode selection probability maps each defining a first terrain indicator probability component associated with a first terrain indicator parameter;
determine a first mode selection probability associated with the first terrain type, the first mode selection probability being determined in dependence on the first terrain indicator probability component derived from the selected one of the plurality of mode selection probability maps; and
select one of the plurality of subsystem control modes in dependence on the determined first mode selection probability.

2. A control system as claimed in claim 1 wherein the first terrain indicator parameter comprises the rolling resistance of the vehicle, the plurality of mode selection probability maps each defining the first terrain indicator probability component associated with the rolling resistance of the vehicle.

3. A control system as claimed in claim 1 or claim 2, wherein selecting one of the plurality of mode selection probability maps comprises comparing the determined moving average of the rolling resistance to a rolling resistance threshold.

4. A control system as claimed in claim 3, wherein the plurality of mode selection probability maps comprise a first mode selection probability map and a second mode selection probability map; the first mode selection probability map being selected in dependence on a determination that the moving average of the rolling resistance is greater than the rolling resistance threshold; the second mode selection probability map being selected in dependence on a determination that the moving average of the rolling resistance is less than the rolling resistance threshold.

5. A control system as claimed in any one of claims 1 to 4, wherein the one or more processor is collectively configured to:
determine a second terrain indicator probability component in dependence on a second terrain indicator parameter;
wherein the first mode selection probability is determined in dependence on the second terrain indicator probability component.

6. A control system as claimed in claim 5, wherein the second terrain indicator parameter comprises a yaw angle of the vehicle, the one or more processor is collectively configured to:
receive a yaw angle signal indicating the yaw angle of the vehicle;
apply a hold and step down function to the yaw angle signal to generate a modulated yaw angle signal; and
determine the second terrain indicator probability component in dependence on the modulated yaw angle signal.

7. A control system as claimed in any one of the preceding claims, wherein the one or more processor is collectively configured to:
determine a third terrain indicator probability component in dependence on a third terrain indicator parameter;
wherein the first mode selection probability is determined in dependence on the third terrain indicator probability component.

8. A control system as claimed in claim 7, wherein the third terrain indicator parameter comprises a body pitch angle of the vehicle, the one or more processor is collectively configured to:
receive a pitch angle signal indicating the body pitch angle of the vehicle;
apply a hold and step down function to the pitch angle signal to generate a modulated pitch angle signal; and
determine the third terrain indicator probability component in dependence on the modulated pitch angle signal.

9. A control system as claimed in any one of the preceding claims, wherein the one or more processor is collectively configured to:
control selection of the first subsystem control mode in dependence on one or more entry condition;
wherein the one or more entry condition comprise one or more of the following: ambient temperature, vehicle speed and terrain roughness.

10. A vehicle comprising a control system as claimed in any one of the preceding claims.

11. A method of controlling selection of one of a plurality of subsystem control modes for controlling the operation of at least one subsystem of a vehicle, each of the subsystem control modes corresponding to one or more different terrain types; wherein the one or more different terrain types comprise a first terrain type corresponding to sand, the subsystem control modes comprising a first subsystem control mode which corresponds to the first terrain type; wherein the method comprises:
determining a rolling resistance of the vehicle;
determining a moving average of the rolling resistance;
selecting one of a plurality of mode selection probability maps in dependence on the determined moving average, the plurality of mode selection probability maps each defining a first terrain indicator probability component associated with a first terrain indicator parameter;
determining a first mode selection probability associated with the first terrain type, the first mode selection probability being determined in dependence on the first terrain indicator probability component derived from the selected one of the plurality of mode selection probability maps; and
selecting one of the plurality of subsystem control modes in dependence on the determined first mode selection probability.

12. Computer readable instructions which, when executed by one or more processor, cause the one or more processor to perform the method according to claim 11.
